# EUROPEAN PATENT APPLICATION

(11) **EP 4 404 346 A1**
(43) Date of publication of application: **24.07.2024**
(21) Application number: 22869282.8
(22) Date of filing: 14.09.2022
(51) Int. Cl.: H01M 50/209, H01M 50/249

(54) **BATTERY MODULE AND VEHICLE**

(30) Priority: 14.09.2021 CN 202122221448 U
(71) Applicant: SVOLT ENERGY TECHNOLOGY CO., LTD, Changzhou, Jiangsu 213200 (CN)
(72) Inventor: QU, Fanduo, hangzhou, Jiangsu 213200 (CN); ZHANG, Haijian, hangzhou, Jiangsu 213200 (CN); TANG, Lijuan, hangzhou, Jiangsu 213200 (CN)
(74) Representative: dompatent von Kreisler Selting Werner - Partnerschaft von Patent- und Rechtsanwälten mbB
(86) International application number: PCT/CN2022/118804
(87) International publication number: WO 2023/040913

(57) **Abstract**

This disclosure discloses a battery module and a vehicle. The battery module comprises a battery unit, connecting pieces and end plates. The battery unit comprises a plurality of unit modules arranged along a first direction, each of the unit modules comprises a mounting bracket and a battery cell assembly fixed to the mounting bracket and comprising a plurality of battery cells arranged along the first direction; the connecting pieces extend along the first direction and are provided on both sides of the battery unit along a second direction perpendicular to the first direction, the mounting bracket being connected to the connecting pieces; the battery unit is provided with the end plates on both ends thereof along the first direction, both sides of the end plate being connected to two of the connecting pieces, respectively.

## Description

This application claims a priority to Chinese Patent Application No. 202122221448.4 filed with the China Patent Office on September 14, 2021, the disclosures of which are incorporated in their entirety by reference herein.

### TECHNICAL FIELD

The present disclosure relates to the technical field of power batteries, for example, to a battery module and a vehicle.

### BACKGROUND

Power batteries are widely used in many fields. In order to improve the energy density of the battery, the battery used in an electric vehicle usually includes a plurality of large modules arranged side by side. The plurality of large modules arranged side by side inside the vehicle jointly supply power to the vehicle. Each of the large modules includes multiple battery cells arranged side by side and fixed by bundling pieces. When one of the battery cells fails, the large module needs to be replaced as a whole, and the maintenance cost is high. In addition, the large module has a large number of battery cells, which is not convenient for production and processing.

Based on this, there is an urgent need for a battery module and a vehicle to solve the above-mentioned problems.

### SUMMARY

The present disclosure provides a battery module and a vehicle, which facilitate the production, processing and maintenance of the battery module, and reduce the cost of maintenance and replacement.

The present invention adopts the following technical solution:
a battery module, including:
a battery unit, including a plurality of unit modules arranged along a first direction, each of the unit modules including a mounting bracket and a battery cell assembly fixed to the mounting bracket and including a plurality of battery cells arranged along the first direction;
connecting pieces extending along the first direction, the connecting pieces being provided on both sides of the battery unit along a second direction perpendicular to the first direction, the mounting bracket being connected to the connecting pieces;
end plates, provided on both ends of the battery unit along the first direction, both ends of the end plate being connected to two of the connecting pieces, respectively.

A vehicle including the battery module as described above.

### BRIEF DESCRIPTION OF THE DRAWINGS

Fig.1 is a schematic diagram of a structure of a battery module provided in an embodiment of the present disclosure;
Fig.2 is a schematic diagram of structures of a battery unit and end plates provided in the embodiment of the present disclosure;
Fig.3 is a schematic diagram of a structure of a unit module provided in the embodiment of the present disclosure;
Fig.4 is a partial enlarged view of part A in Fig.3;
Fig.5 is a schematic diagram of a partial structure of the battery module provided in the embodiment of the present disclosure;
Fig.6 is a schematic diagram of a bottom structure of the battery module provided in the embodiment of the present disclosure.

In the drawings:
1: unit module; 11: connecting arm; 111: connecting ear; 112: connecting lip; 113: bending edge; 12: battery cell;
2: end plate;
3: connecting piece; 31: rod portion; 32: limiting portion; 321: end plate connecting hole; 33: connecting protrusion; 331: connecting hole;
4: liquid cooling plate.

### DETAILED DESCRIPTION

In the description of this disclosure, unless otherwise expressly specified and defined, the terms "connected", "connecting" and "fixed" should be understood in a broad sense. For example, they can be fixed connections, detachable connections, or integrated connections; they can be mechanical or electrical connections; they can be direct connections or indirect connections via an intervening medium; and they can represent internal communication of two components or an interaction relationship between two components. Those of ordinary skill in the art can understand the specific meanings of the above terms in this disclosure based on specific circumstances.

In this disclosure, unless otherwise expressly specified and defined, a first feature being "on" or "under" a second feature may include direct contact between the first and second features, or contact between them via another intervening feature rather than the direct contact. Moreover, the first feature "on", "above" and "over" the second feature includes the first feature directly above and obliquely above the second feature, or simply means that the level of the first feature is higher than that of the second feature. The first feature "below", "beneath" and "under" the second feature includes the first feature directly below and obliquely below the second feature, or simply means that the level of the first feature is lower than that of the second feature.

The technical solution of the present invention will be explained below in conjunction with the accompanying drawings and through a specific embodiment.

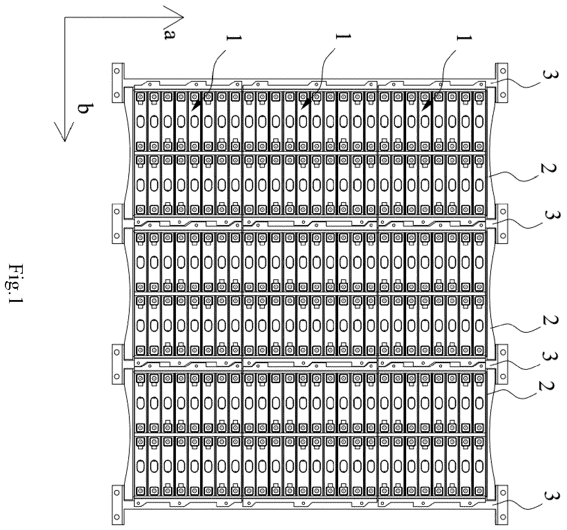

This embodiment provides a battery module. As shown in Figs. 1-6, the battery module includes a battery unit, connecting pieces 3 and end plates 2. The battery unit includes a plurality of unit modules 1 arranged along a first direction, and each of the unit modules 1 includes a mounting bracket and a battery cell assembly fixed to the mounting bracket and including a plurality of battery cells 12 arranged along the first direction. The connecting pieces 3 extend along the first direction, and are provided on both sides of the battery unit along a second direction perpendicular to the first direction, and the mounting bracket is connected to the connecting pieces 3. The battery unit is provided with the end plates 2 on both ends thereof along the first direction, and both ends of the end plate 2 are connected to two of the connecting pieces 3, respectively. That is to say, the two end plates 2 and the two connecting pieces 3 can be enclosed to form a frame-like structure, in which the battery unit is placed. In this embodiment, both the first and second directions are horizontal directions. Moreover, the battery unit includes three unit modules 1.

The battery module provided in this embodiment includes the battery unit, the connecting pieces 3 and the end plates 2. The battery unit includes the plurality of independently provided unit modules 1, so that the battery cells 12 first form the plurality of unit modules 1, and then the plurality of unit modules 1 form the battery unit. The unit module 1 contains a smaller number of battery cells 12, and thus has a smaller size, which facilitates the production, processing and maintenance. Moreover, when the battery cell(s) 12 in one of the unit modules 1 fails, only this unit module 1 needs to be replaced, which avoids direct replacement of the battery unit, and thus reduces the cost of maintenance and replacement. The end plates 2 and the connecting pieces 3 are enclosed to form the frame-like structure for housing the battery unit. The battery unit is placed in the frame-like structure, and the mounting bracket is connected to the connecting pieces 3 so that the connecting pieces 3 have the function of fixing the unit module 1, and the end plates 2 can limit the deformation of the battery cell 12 when the battery cell 12 undergoes expansion deformation or explosion, which reduces the possibility of failure of other battery cells 12 due to compression, and thus improves the durability and service life.

For ease of understanding, the first and second directions are identified in Fig.1. In Fig.1, a positive or negative direction of direction a is defined as the first direction, and a positive or negative direction of direction b is defined as the second direction.

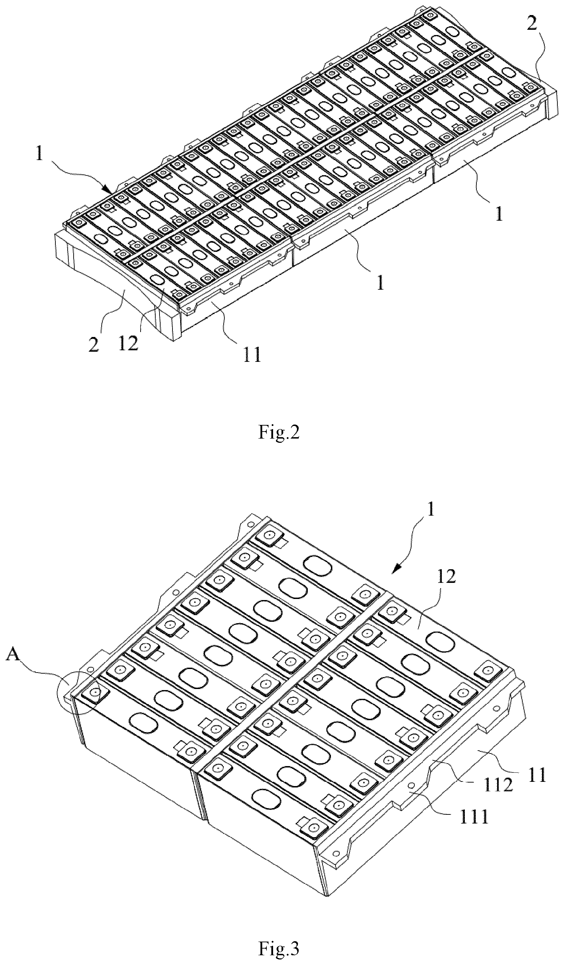

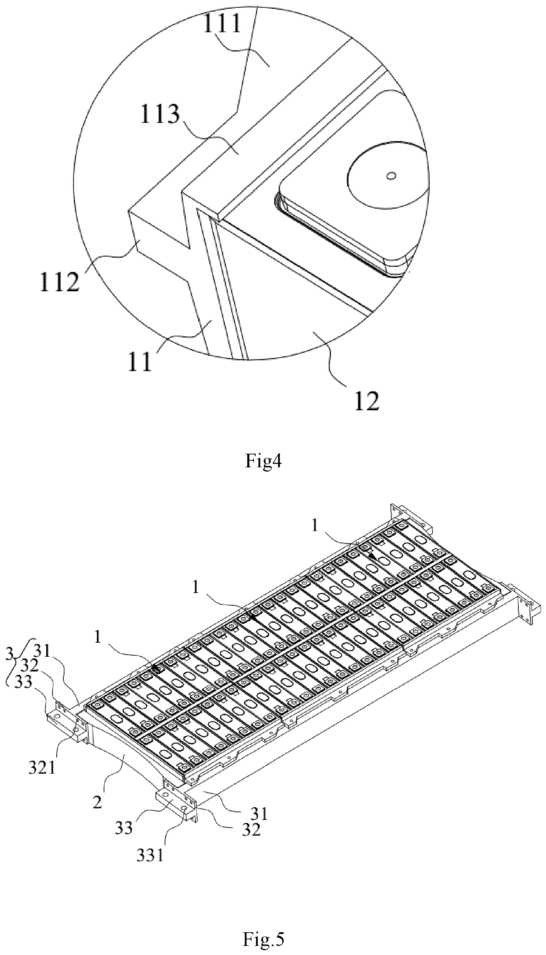

In this embodiment, as shown in Figs. 3 and 4, the mounting bracket includes two connecting arms 11, which are separated along the second direction, and which are correspondingly connected to two of the connecting pieces 3 on both sides of the battery unit. That is, the unit module 1 is simultaneously connected to the connecting pieces 3 on both sides, which ensures the reliability of connection between the unit module 1 and the connecting pieces 3. For example, the connecting arm 11 extends along the first direction, and at least one side of each battery cell 12 along the second direction is connected to the connecting arm 11, and the connecting arm 11 has the same length as the battery cell assembly. That is, ends of the connecting arm 11 are flush with ends of the battery cell assembly. Therefore, when end faces of two adjacent unit modules 1 are fitted together, the battery cells 12 of the two unit modules 1 are fitted to each other, which reduces the volume of the battery module and increases the energy density. In addition, the end plates 2 are also fitted to the ends of the unit module 1.

In other embodiments, between the two connecting arms 11, a supporting and connecting arm may also be connected, which can not only connect the two connecting arms 11, but also support the battery cell assembly. At this point, the mounting bracket is U-shaped, with its opening running through both ends of the mounting bracket in the first direction, and the battery cell assembly is placed in the opening. The connecting arms 11 are provided with connecting ears 111 protruding on their sides facing away from each other, and the connecting ears 111 are connected to the connecting pieces 3.

Each of the connecting arms 11 is provided with a plurality of connecting ears 111, and in this embodiment, each of the connecting arms 11 is provided with a connecting lip 112 protruding on its side facing away from the other connecting arm 11. The connecting lip 112 extends along the first direction, and three connecting ears 111 are provided protruding on the connecting lip 112.

For example, a top cover of the battery cell 12 is arranged to face upwards, and both poles of the battery cell 12 are placed on the top cover. As shown in Fig.4, a side of the connecting arm 11 facing the battery cell 12 is provided with a folded edge 113, and a bottom surface of the folded edge 113 is fitted to the top cover of the battery cell 12, which can limit the position of the battery cell 12.

In this embodiment, two battery cell assemblies are provided within one unit module 1 and are arranged along the second direction, and each of the battery cell assemblies includes eight or ten battery cells 12 arranged along the first direction, and there is a separator between the two battery cell assemblies. In other embodiments, the numbers of the battery cell assemblies within each unit module 1 and the numbers of the battery cells 12 within the battery cell assembly can be adjusted adaptively, and are not limited thereto.

For example, as shown in Fig.5, the connecting piece 3 includes a rod portion 31 extending along the first direction, and limiting portions provided at both ends of the rod portion 31. The battery unit is provided with the rod portions 31 on both sides along the second direction, and the mounting bracket is connected to the rod portions 31. For example, the connecting ears 111 are connected to the rod portions 31. The limiting portion 32 protrudes along the second direction from a side of the rod portion 31 facing the end plate 2, and a protruding portion of the limiting portion 32 is connected to the end plate 2. With the above structural arrangement, when the battery cell 12 undergoes expansion deformation, the limiting portions 32 can limit the deformation of the end plates 2, which ensures the stability of the frame-like structure and thus limits the deformation of the battery cell 12, reducing the possibility of failure of other battery cells 12 due to compression, and thus improving the durability and service life. In this embodiment, the protruding portion of the limiting portion 32 and the battery unit are placed on both sides of the end plate 2, respectively, and the protruding portion of the limiting portion 32 is fitted with the end plate 2. In other embodiments, the protruding portion of the limiting portion 32 is connected to an end of the end plate 2 facing the connecting piece 3, and the limiting portion 32 is integrated with the end plate 2.

In this embodiment, the connecting ear 111 is provided with a through hole which is open in a vertical direction, and is arranged above the rod portion 31 and is connected to the rod portion 31 through a bolt.

In this embodiment, the limiting portion 32 is in the shape of a plate arranged vertically, and is perpendicularly connected to the rod portion 31. The limiting portion 32 is provided with an end plate connecting hole 321 which is open in the first direction, so that the limiting portion 32 can be connected to the end plate 2 through a bolt. The limiting portions 32 of the connecting pieces 3 on both sides of the same battery unit are each provided in a protruding manner. That is, both sides of the end plate 2 are connected to the limiting portions 32 of two connecting pieces 3, respectively, which ensures the stability of the frame-like structure.

For example, as shown in Fig.5, the connecting piece 3 further includes a connecting protrusion 33 which is placed on a side of the limiting portion 32 facing away from the rod portion 31, and which is provided with a connecting hole 331. The connecting hole 331 is provided so that the connecting piece 3 can be connected to a case body of a battery pack, a vehicle body or other external structures through a bolt, which improves the practicability. In this embodiment, the connecting protrusion 33 is block-shaped and protrudes from the limiting portion 32, and the connecting hole 331 is a through hole and is opened in a vertical direction. In other embodiments, the shape of the connecting protrusion 33 and the position of the connecting hole 331 can be adjusted adaptively, and are not limited herein.

For example, the rod portion 31, the limiting portions 32, and the connecting protrusion 33 of the connecting piece 3 are made of metal, and are provided as an integrated structure, which facilitates the production and processing. In other embodiments, the rod portion 31, the limiting portion 32 and the connecting protrusion 33 can be connected by welding, which is not limited herein.

For example, the end plate 2 extends along the second direction, and has a plate thickness increasing from the middle towards both sides along the second direction. When the battery cell 12 undergoes expansion deformation, the middle of the end plate 12 has a larger amount of deformation due to its lower rigidity, while thicker parts on the two sides of the end plate 2 have smaller amounts of deformation due to their connection to the limiting portions 32 and higher rigidity, which ensures the reliability of connection between the end plates 2 and the connecting pieces 3 and thus the stability of the frame-like structure. In this embodiment, a side of the end plate 2 facing away from the unit module is an arc-shaped surface, which facilitates the processing. In addition, the end plate 2 provided in this way has a relatively light weight, which is conducive to the improvement of the energy density of the battery module.

For example, there is a plurality of the battery units provided along the second direction and alternately arranged with the connecting pieces 3; and on the connecting piece 3 between two adjacent ones of the battery units, both ends of the limiting portion 32 along the second direction protrude on both sides of the rod portion 31, and are connected to two of the end plates 2, respectively. This structural arrangement allows the same connecting piece 3 to be connected to two end plates 2, which facilitates the connection of two frame-like structures, thus making it easy to connect two battery units, increasing the number of the battery cells 12 within the battery module, and improving the practicability of the battery module. This structural arrangement also reduces the number of the connecting pieces 3 between the two battery units, thereby reducing the number of the battery module structures and lowering the cost. This structural arrangement further reduces the weight of the battery module, increases the energy density, and improves the practicability of the battery module. For example, on the connecting piece 3 between two battery units, the limiting portion 32 is arranged with both ends along the second direction protruding from the rod portion 31, such that ends of the connecting piece 3 form a "T" shape, and the two ends of the limiting portion 32 are connected to two end plates 2, respectively, reducing the number of the connecting pieces 3 and the spacing between two adjacent battery units, and thus improving the energy density of the battery.

In some embodiments, on two connecting pieces 3 on both sides of the plurality of battery units, the limiting portions 32 protrude from the rod portions 21 only towards the sides of the end plates 2, thus making ends of the connecting piece 3 have an "L" shape.

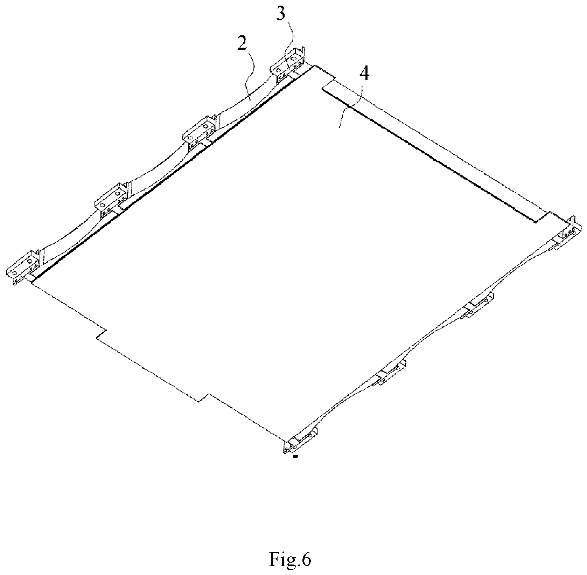

For example, as shown in Fig.6, the battery module further includes a liquid cooling plate 4, which can seal the above-mentioned frame-like structure and carry the battery unit. The connecting pieces 3 are connected to the liquid cooling plate 4. The liquid cooling plate 4 is provided to carry the battery unit, which improves the structural stability of the battery module. In addition, providing the mounting bracket as two disconnected connecting arms 11 also improves the heat transfer efficiency between the battery cells 12 and the liquid cooling plate 4. For example, the liquid cooling plate 4 is horizontally arranged and placed at the bottoms of the battery unit and the connecting pieces 3, and the two ends of the connecting piece 3 protrude from an edge of the liquid cooling plate 4 and are connected to the end plates 2. The connecting pieces 3 can be connected to the liquid cooling plate 4 through bolts. The structure of the liquid cooling plate 4 belongs to a related technology, and will not be repeated here.

In other embodiments, the end plates 2 can be placed above the liquid cooling plate 4, and the end plates 2 are connected to the liquid cooling plate 4 through bolts, improving the stability of the frame-like structure.

In some embodiments, a heat conducting layer is provided between the liquid cooling plate 4 and the unit module 1, which improves the heat transfer efficiency between the battery cells 12 and the liquid cooling plate 4, enhances the heat dissipation efficiency of the battery cells 12, and ensures the safety of the battery module. Furthermore, the heat conducting layer does not have a bonding function, making it easy to detach the unit module 1 from the battery module, which is conducive to the maintenance.

In some other embodiments, a bonding layer is provided between the liquid cooling plate 4 and the unit module 1, which improves the structural stability and structural strength of the battery module. For example, a heat-conducting silicone layer is provided between the liquid cooling plate 4 and the unit module 1, which has both heat conducting and bonding functions.

This embodiment further provides a vehicle. For example, the above vehicle includes the battery module as described above, which reduces the production cost of the battery module and also lowers the cost of maintenance and replacement.

The vehicle can be represented in the form of universal terminals. In addition to the battery module as described above, the components of the vehicle can include but are not limited to: the vehicle body, one or more processors, storage devices, and a bus connecting different system components (including the storage devices and the processor(s)).

## Claims

1. A battery module, comprising:
a battery unit, comprising a plurality of unit modules (1) arranged along a first direction, each of the unit modules (1) comprising a mounting bracket and a battery cell assembly fixed to the mounting bracket and comprising a plurality of battery cells (12) arranged along the first direction;
connecting pieces (3) extending along the first direction, the connecting pieces (3) being provided on both sides of the battery unit along a second direction perpendicular to the first direction, the mounting bracket being connected to the connecting pieces (3);
end plates (2), provided on both ends of the battery unit along the first direction, both ends of the end plate (2) being connected to two of the connecting pieces (3), respectively.

2. The battery module according to claim 1, wherein the connecting piece (3) comprises a rod portion (31) extending along the first direction, and limiting portions (32) provided at both ends of the rod portion (31), and the mounting bracket is connected to the rod portion (31), the limiting portion (32) protrudes along the second direction from a side of the rod portion (31) facing the end plate (2), and a protruding portion of the limiting portion (32) is connected to the end plate (2).

3. The battery module according to claim 2, wherein the connecting piece (3) further comprises a connecting protrusion (33), which is placed on a side of the limiting portion (32) facing away from the rod portion (31), and which is provided with a connecting hole (331).

4. The battery module according to claim 2, wherein there is a plurality of the battery units provided along the second direction and alternately arranged with the connecting pieces (3); and on the connecting piece (3) between two adjacent ones of the battery units, the limiting portion (32) is connected to two of the end plates (2).

5. The battery module according to claim 1, wherein the mounting bracket comprises two connecting arms (11), which are separated along the second direction, and which are correspondingly connected to two of the connecting pieces (3).

6. The battery module according to claim 1, further comprising a liquid cooling plate (4) which can carry the battery unit, the connecting pieces (3) being connected to the liquid cooling plate (4).

7. The battery module according to claim 6, wherein a heat conducting layer is provided between the liquid cooling plate (4) and the unit module (1).

8. The battery module according to claim 6, wherein a bonding layer is provided between the liquid cooling plate (4) and the unit module (1).

9. The battery module according to any one of claim 1 to 8, wherein the end plate (2) has a plate thickness increasing from the middle towards both sides along the second direction.

10. A vehicle, comprising the battery module as claimed in any one of claims 1 to 9.
